Europäisches Patentamt

European Patent Office

Office européen des brevets

(11) Publication number: **0 520 441 A2**

# EUROPEAN PATENT APPLICATION

(21) Application number: **92110711.6**

(22) Date of filing: **25.06.92**

(51) Int. Cl.5: **G01J 3/10, H01J 61/00**

(30) Priority: **27.06.91 IT RM910139 U**

(43) Date of publication of application:
**30.12.92 Bulletin 92/53**

(84) Designated Contracting States:
**AT CH DE FR GB LI NL SE**

(71) Applicant: **CENTRO SVILUPPO MATERIALI S.p.A.**
**Via di Castel Romano 100-102**
**I-00129 Roma(IT)**

(72) Inventor: **Cilia, Marcello**
**Via Ciasca 66**
**I-00159 Rome(IT)**
Inventor: **Del Monte, Maria Grazia**
**Via Aereonautica 99**
**I-00144 Rome(IT)**
Inventor: **Tomellini, Renzo**
**Via Tonoli 10**
**I-00151 Rome(IT)**
Inventor: **Caroli, Sergio**
**Via Prina 24**
**I-00139 Rome(IT)**
Inventor: **Senofonte, Oreste**
**Via Sestio Calvino**
**I-00174 Rome(IT)**

(74) Representative: **Gervasi, Gemma et al**
**NOTARBARTOLO & GERVASI Srl Viale**
**Bianca Maria 33**
**I-20122 Milan(IT)**

(54) Exitation source for optical emission spectometry.

(57) Excitation source for optical emission spectrometry such as hollow cathode lamps with strengthened resonant cavity (3) having the form of a hollow geometrical solid comprising a top base (5), a blanket and a lower base (2) characterized by the following elements:
- a first insulating plate (6) positioned in a seat made in said top base (5),
- a second insulating plate (7) positioned in a seat made in said first insulating plate (6),
- a hollow cathode positioned in a seat made in said second insulating plate (7),
- means (9,10) for realizing a direct coupling between said sample (8) and a potential differential generator, and
- cooling means for said coupling means (10).

Fig. 1

The present invention relates to an excitation source for optical emission spectrometry and more specifically it refers to an improvement on strengthened hollow cathode lamp devices such as to allow direct analysis even of massive samples and in any case lowering the detectability limits. Optical emission spectrometry is a very widespread technique thanks to its great versatility and ability to determine simultaneously all the interesting elements present in the samples being examined.

Said technique does not however have very high detectability limits and, in view of the present demand, both during the design and during the material control, for an ever higher sensitivity, continuous efforts are addressed to analysis methods capable of determining in the materials being examined the content of elements present even in the form of impurities up to concentrations of nanograms per gram.

In this situation can be considered the possibilities offered by the known excitation sources including flat cathode or glow lamps and hollow cathode lamps.

The former, although a sufficiently valid analytical means of conducting analyses even on massive samples, are subject to significant limitations when a very low concentration of elements in materials of high purity must be releaved or performance surface analysis, especially of very thin coatings where drastic changes in composition occur, must be made.

Hollow cathode lamps have, in comparison with glow lamps, greater sensitivity which allows determination of very low concentrations but they also have the disadvantage of being uncapable of directly analyzing massive samples.

Within the research into still stronger analytical performance, attention was turned to the possibility of coupling low pressure sources with supplementary excitation techniques such as electrical and magnetic fields, radiofrequencies, laser and microwaves.

The strengthening of these low pressure sources by application to the atomic vapour of auxiliary energy, e.g. in the form of a discharge of microwaves which resonate in the zone where the glow is located, is particularly interesting thanks to its simplicity of construction and possibilities of use.

In Applied Spectroscopy, Vol. 41, Number 4,1987, pages 579-583 a microwave strengthened hollow cathode lamp is described in which an external generator sends over a coaxial cable the microwaves inside a resonant cavity of the Beenakker type placed between the anodic block and the cathodic block.

In its construction this type of lamp is characterized by an insulating plate having a thickness of 20mm, a 15mm cathodic block and then a cathode with internal length of 45mm.

With these devices it is possible to perform only analyses of solutions and chips, while the problem of direct analysis of massive samples has still not been solved.

This is a considerable problem which appears markedly for example in the determination of very hard alloy elements such as nickel alloys.

Indeed, to make samples in sizes suitable for housing in the cathode cavity, a long, elaborate and costly preparation of the samples including, among other things chipping, grinding or turning is necessary.

In addition, even if samples in the sizes suitable to be placed inside the hollow cathode are realized, other problems tied to the high temperatures reached during testing can arise.

Indeed, among other things, fractional distillation of the low boiling point elements, vaporization and redepositing of the graphite of the cathodes and hence overall analysis with clearly unreliable results can occur.

In addition, because of the excessive distance between the anodic block and the cathodic block, the discharge which causes erosion of the samples is unstable; the erosion on samples appears weak and not uniform and hence the measure values are not repeatable and not reliable. Consequently it is not possible to plot setting curves.

Lastly, the graphite deposited on the sample due to vaporization of the cathode cylinder can lead to formation of an electric arc discharge with possible short circuiting of the entire system.

Therefore, despite the progress achieved heretofore in the field of optical emission spectrometry, the problems of analysis of massive samples, vaporization and redeposit of graphite, excessive distance between the anodic block and the cathodic block and short circuits in the equipment still remain substantially unsolved.

Object of the present invention is therefore a simple, reliable optical emission source for a spectrometry excitation capable of performing direct analysis even of massive samples.

Another object of the present invention is the elimination of vaporization and redeposit of graphite of the cathodic cylinders.

Another object of the present invention is the reduction of the excessive distance between the anodic and cathodic blocks.

Another object of the present invention is the prevention of formation of an electric arc discharge short-circuiting the system.

Finally, a further object of the present invention is to significantly lower the detectability limits presently achieved.

In accordance with the present invention, the suggested improvement is enclosed in excitation sources for optical emission spectrometry, such as hollow cathode lamps with strengthened resonant cavity having the form of a hollow geometrical solid comprising a top base, a blanket and a lower base, said improvement being characterized by the combination of the following elements:

- a first insulating plate positioned in a seat made in said top base,
- a second insulating plate positioned in a seat made in said first insulating plate,
- a hollow cathode positioned in a seat made in said second insulating plate,
- means for realizing a direct coupling between said sample and a potential differential generator, and
- cooling means for said coupling means.

The first cylinder shaped insulating plate has an axial truncated-cone passing hole with the minor side turned toward the interior of said resonating cavity and also on the outer face in relation to said resonating cavity a raised peripheral edge and at least one housing for sealing rings.

Said first insulating plate can be made for example of PTFE.

The second insulating plate has truncated cone shape with minor side turned toward the inside of said resonating cavity and an axial cylindrical passing hole.

Said second plate is housed in the axial truncated cone passing hole made in the first insulating plate and is also made of material, e.g. ceramic, suitable for both electrically and thermally insulating the hollow cathode from the rest of the system.

Said insulating plates can both have a thickness between 3mm and 10mm or said second plate can be thinner than the first plate.

The hollow cathode consists of a body of drilled cylindrical form and is housed in the axial cylindrical passing hole made in the second insulating plate and faces inward on the resonant cavity and externally on the sample being examined. It can be made e.g. of graphite or copper.

Said cathode has a length between 13mm and 18mm and a diameter between 4mm and 8mm.

Said cathode and said second insulating plate in the portions in which they interface with a sample to be analyzed can be coplanar to provide correct and easy positioning of the sample.

The means of providing direct coupling between the hollow cathode, the sample and the potential differential generator include a cooled metal shell placed as a seal around the sample and against the outer surface of at least one of said insulating plates and pressure means for pressing said sample against said hollow cathode and against at least one of said insulating plates.

In addition, in the contact part between said shell and the first plate a cavity is made in which the housing of a sealing O-ring, is possible.

Said shell is made e.g. of aluminium.

Said pressure means can be of the electrohydraulic, electropneumatic or mechanical type but in any case capable of maintaining steadily in measurement position the sample being examined and even ensuring continuous electrical contact.

The cooling means consist of ducts for inlet and outlet of a cooling fluid inside said shell.

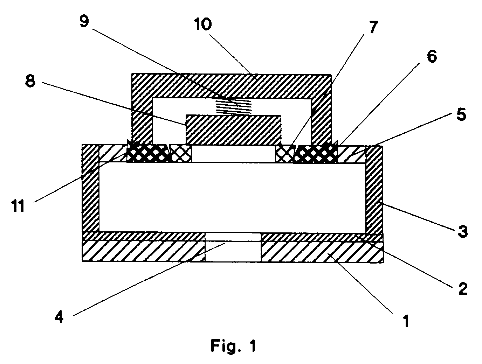

The present invention is now illustrated in greater detail with reference to a diagrammatic form of embodiment thereof shown in the enclosed FIG. 1.

The anodic block (1) faces on the lower base (2) of the resonating cavity (3) which bears a sealed window (4) transparent to the lamp emissions. In the upper base (5) of the resonating cavity (3) is made a seat for a first insulating plate (6) inside which is made a truncated cone seat for housing a second insulating plate (7) allowing housing a hollow cathode (not shown in the figure) on which rests the sample (8) which is held in position by a spring (9). The sample (8) and spring (9) are enclosed in the shell (10) cooled by the aforementioned cooling means not shown in the figure.

In operation, a potential difference between the anodic block (1) and the cathode is applied to the lamp. The cathode contact takes place following the path: shell(10) - spring (9) - sample (8) - cathode.

Since the resonating cavity (3) contains a gas (typically argon) under low pressure, if a potential difference is applied between the cathode and the anodic block (1) strikes in said gas an ion discharge which, through the drilled cathode, reaches the sample (8) whose surface layers are in this manner eroded. The atoms of the sample (8) constitute therefore an excited plasma confined in the cavity of the cylindrical cathode whose emitted light is sent to a spectrometer interfaced by the window (4) made in the anodic block (1) and in the lower base (2) of the resonating cavity (3).

During experimentation, numerous tests were performed. In particular, in accordance with one embodiment of the present invention, a lamp having a Beenakker cavity, a first insulating plate 5mm thick, a second insulating plate of the same thickness and a cathode 15mm long was considered. Finally, argon was used to provide an inert atmosphere.

After selecting as reference materials low alloy steels NBS 457D60 and a sample of electrolytic iron whose emission intensity was taken as zero, comparative measurements of the emission of aluminium using a strengthened glow lamp available in trade and a lamp provided in accordance with the present invention were made.

The experimental conditions for analysis of the massive samples are for the strengthened glow lamp voltage 500V, current 60mA and pressure 600Pa while for the proposed model they are voltage 280-300V, current 292mA and pressure 193Pa. As may be seen from the values set forth in the following table 1, the emission recording in millivolts of the samples analyzed and measured using the two sources for the improved hollow cathode lamp, in accordance with the present invention, was higher.

The greater sensitivity of the improvement proposed was also shown by evaluating the detectability limit for aluminium produced by the strengthened glow lamp and equal to 0.4$\mu$g/g and the one of the present invention equal to 0.05$\mu$g/g.

TABLE 1

| Al ($\mu$g) | Sample | Strengthened glow lamp (mv) | Present invention (mv) |
|---|---|---|---|
| | Electrolytic iron | - | |
| 80 | NBS 457 | 74 | 254 |
| 280 | NBS 460 | 266 | 915 |
| 690 | NBS 459 | 695 | 2450 |
| 1400 | NBS 458 | 1429 | 4440 |

In addition, the erosion produced by the improvement of the invention was more uniform and regular than the one of the strengthened glow lamp used as reference.

Finally, the erosion speed of the proposed improvement is less than that achievable with the flat cathode lamps or the unstrengthened lamps. This also provides a better depth-definition, which is a particularly interesting element in the analysis of thin coatings and in particular in analysis concerning the first micrometers of the material and in interface analysis.

## Claims

1. Excitation source for optical emission spectrometry such as hollow cathode lamps with strengthened resonant cavity (3) having the form of a hollow geometrical solid comprising a top base (5), a blanket and a lower base (2) characterized by the following elements:
   - a first insulating plate (6) positioned in a seat made in said top base (5),
   - a second insulating plate (7) positioned in a seat made in said first insulating plate (6),
   - a hollow cathode positioned in a seat made in said second insulating plate (7),
   - means (9,10) for directly coupling said sample (8) to a potential differential generator, and
   - cooling means for said coupling means (10).

2. Source in accordance with claim 1 characterized in that said first insulating plate (6) is cylinder shaped, has an axial truncated-cone passing hole with the minor side turned toward the inside of said resonating cavity (3) and also has on its external side, as regard to said resonating cavity (3), a raised peripheral edge and at least one housing for seal rings.

3. Source in accordance with claim 1 characterized in that said second insulating plate (7) is truncated-cone shaped with the minor side turned toward the inside of said resonating cavity (3) and an axial cylindrical passing hole.

4. Source in accordance with claim 1 characterized in that said insulating plates (6,7) both have a thickness between 3mm and 10mm.

5. Source in accordance with claim 1 characterized in that said second insulating plate (7) is thinner than said first plate (6).

6. Source in accordance with claim 1 characterized in that said hollow cylindrical cathode has a length between 13mm and 18mm and diameter between 4mm and 8mm.

7. Source in accordance with claim 1 characterized in that said coupling means (9,10) comprise a metal shell (10) cooled by said cooling means sealing around said sample (8) and against the external surface of at least one of said insulating plates (6,7) and said metal shell (10) comprising also pressure means (9) for pressing said sample (8) against said hollow cathode and against at least one of said insulating plates (6,7).

8. Source in accordance with claim 7 characterized in that said pressure means (9) comprise at least one metal spring.

Fig. 1